**Europäisches Patentamt**

**European Patent Office**

**Office européen des brevets**

(11) Veröffentlichungsnummer : **0 167 515 B2**

(12) **NEUE EUROPÄISCHE PATENTSCHRIFT**

(45) Veröffentlichungstag der neuen Patentschrift :
**18.03.92 Patentblatt 92/12**

(21) Anmeldenummer : **85890114.3**

(22) Anmeldetag : **20.05.85**

(51) Int. Cl.⁵ : **F27B 3/18,** F27D 11/08,
C21C 5/52

(54) **Elektroofen.**

(30) Priorität : **01.06.84 AT 1811/84**

(43) Veröffentlichungstag der Anmeldung :
**08.01.86 Patentblatt 86/02**

(45) Bekanntmachung des Hinweises auf die
Patenterteilung :
**02.03.88 Patentblatt 88/09**

(45) Bekanntmachung des Hinweises auf die
Entscheidung über den Einspruch :
**18.03.92 Patentblatt 92/12**

(84) Benannte Vertragsstaaten :
**CH DE FR GB IT LI SE**

(56) Entgegenhaltungen :
**DE-C- 2 944 269**
**FR-A- 1 253 550**
**FR-A- 2 218 397**
**FR-A- 2 305 090**
**FR-A- 2 535 835**
**US-A- 1 861 213**
**US-A- 2 579 885**

(73) Patentinhaber : **VOEST-ALPINE**
**INDUSTRIEANLAGENBAU GESELLSCHAFT**
**m.b.H.**
**Turmstrasse 44**
**A-4020 Linz (AT)**

(72) Erfinder : **Berger, Harald, Dr. Dipl.-Ing.**
**Mariahilfgasse 11**
**A-4020 Linz (AT)**
Erfinder : **Riegler, Ernst**
**Grollerstrasse 5**
**A-4470 Enns (AT)**
Erfinder : **Zajicek, Ernst**
**Donaulände 10**
**A-4100 Ottensheim (AT)**

(74) Vertreter : **Wolfram, Gustav, Dipl.-Ing.**
**Schwindgasse 7 P.O. Box 205**
**A-1041 Wien (AT)**

EP 0 167 515 B2

## Beschreibung

Die Erfindung betrifft einen Elektroofen mit einem wannenförmigen Unterteil und einem auf den Unterteil aufgesetzten Oberteil, durch dessen Deckel oder Seitenwände Elektroden bzw. Plasmabrennen in den Ofeninnenraum ragen, wobei der Unterteil einen die Wand des Oberteiles an mindestens einer Seite nach außen erkerartig überragenden Vorsprung, in dessen Boden das Abstichloch angeordnet ist, aufweist.

Ein Elektroofen dieser Art ist aus der DE-C - 29 44 269 bekannt. Der Oberteil des bekannten Ofens ist kreiszylindrisch gestaltet und es steht der Vorsprung des Unterteiles über den kreiszylindrischen Oberteil radial vor. Das Abstichloch ist dadurch zwar leicht zugänglich, jedoch besteht infolge des großen Abstandes des Abstichloches von der Ofenmittelachse die Gefahr, daß die in den erkerartigen Vorsprung fließende Schmelze im Bereich des Vorsprunges einfriert. Will man einen solchen Vorsprung nachträglich bei einem Ofen einbauen, so ist der Aufwand sehr groß, da das Ofengeläß im Bereich des Vosprunges aus Festigkeitsgründen verstärkt werden muß. Der durch den Vorsprung vergrößerte Ofeninnenraum bedingt Wärmeverluste.

Ein Ofen der eingangs beschriebenen Art ist auch aus der FR-A-1 253 550 bekannt. Dieser Ofen weist eine abgeschrägt ausgebildete Ofenwanne auf, wobei an der Abschrägung eine eine Kammer bildende Gießrinne angesetzt ist. Diese Gießrinne weist eine erhebliche Längserstreckung auf, da, soll das Abstichloch von oben zugänglich sein, die Gießrinne auf jeden Fall über dem Oberteil des Ofens vorschauend ausgebildet sein muß. Bei dieser Konstruktion ist die Gefahr eines Einfrierens des Abstichloches im besonderen Maß gegeben.

Die Erfindung bezweckt die Vermeidung dieser Schwierigkeiten und Nachteile und stellt sich die Aufgabe, einen Elektroofen der eingangs beschriebenen Art zu schaffen, bei dem trotz Anordnung eines erkerartigen Vorsprunges Energieeinsparungen und Einsparungen an Zustellung erzielt werden bzw. durch den Vorsprung bedingte Wärmeverluste vermieden werden. Weiters sollen bestehende Elektroöfen ohne Vorsprung in einfacher Weise zu Elektroöfen mit einem Vorsprung umgebaut werden können, ohne daß es erforderlich ist, die alte Konstruktion zu verstärken.

Diese Aufgabe wird erfindungsgemäß dadurch gelöst, daß nur der dem Abstichloch zugewandte Wandteil des Oberteiles gegenüber der Mittelachse des Oberteiles eingezogen ist, und der radiale Abstand des eingezogenen Wandteiles von der Ofenmittelachse geringer ist als der Abstand des radial gegenüberliegenden Wandteiles.

Aus der FR-A-2 305 090 ; ist ein Ofen mit asymmetrischen Horizontalquerschnitt bekannt, bei dem die Schmelze jedoch über eine Ausgießschnauze abgezogen wird. Der Ofen ist um eine senkrechte Achse schwenkbar, wodurch die gegenüber dem Ofen ortsfest angeordneten Elektroden den Raum innerhalb des Ofens bestreichen. Bei diesem bekannten Ofen stellt sich das Problem des Einfrierens des Ausgusses nicht.

Eine bevorzugte Ausführungsform ist dadurch gekennzeichnet, daß der Unterteil einen im Grundriß kreisförmigen Umriß mit integriertem Vorsprung aufweist, wodurch der Ofen trotz eines Vorsprunges besonders kompakt ist.

Zur gleichmäßigen Wärmebeaufschlagung der Ofeninnenwände sind zweckmäßig die Elektroden bzw. Plasmabrenner zur Vergrößerung des Abstandes vom eingezogenen Wandteil in Richtung zum gegenüberliegenden Wandteil versetzt angeordnet.

Vorzugsweise ist der dem Abstichloch zugewandte Wandteil des Oberteiles abgeflacht oder konkav eingewölbt.

Die Erfindung ist nachfolgend anhand zweier Ausführungsformen näher erläutert, wobei Fig. 1 einen Vertikalschnitt durch einen Elektroofen und Fig. 2 einen Grundriß desselben gemäß einer ersten Ausführungsform zeigen. In Fig. 3 ist ein Grundriß einer zweiten Ausführungsform dargestellt.

Der Elektroofen weist einen wannenförmigen Unterteil 1 mit angenähert kreisförmigem Grundriß und einen auf dem Unterteil 1 aufgesetzten Oberteil 2 auf, durch dessen schematisch angedeuteten Deckel 3 drei Elektroden 4 in den Ofeninnenraum 5 geführt sind. Der wannenförmige Unterteil 1 ist mit einer feuerfesten Ausmauerung 6 versehen und weist einen den Oberteil 2 an einer Seite 7 überragenden erkerartigen Vorsprung 8, der von kühlmitteldurchflossenen Rohren 9 bedeckt ist, auf. Im Boden 10 des Vorsprunges 8 ist ein Abstichloch 11 vorgesehen, welches mittels einer nicht näher dargestellten Verschlußeinrichtung 12, wie einer Verschlußklappe, geschlossen bzw. geöffnet werden kann. Zum Zweck des Schlackenabstichs ist dem Vorsprung 8 radial gegenüberliegend eine Schlakkenabflußrinne 13 am Unterteil vorgesehen, die mittels einer nicht dargestellten Türe verschließbar ist. Der Oberteil 2 des Elektroofens ist von kühlmitteldurchflossenen Rohren 14 gebildet.

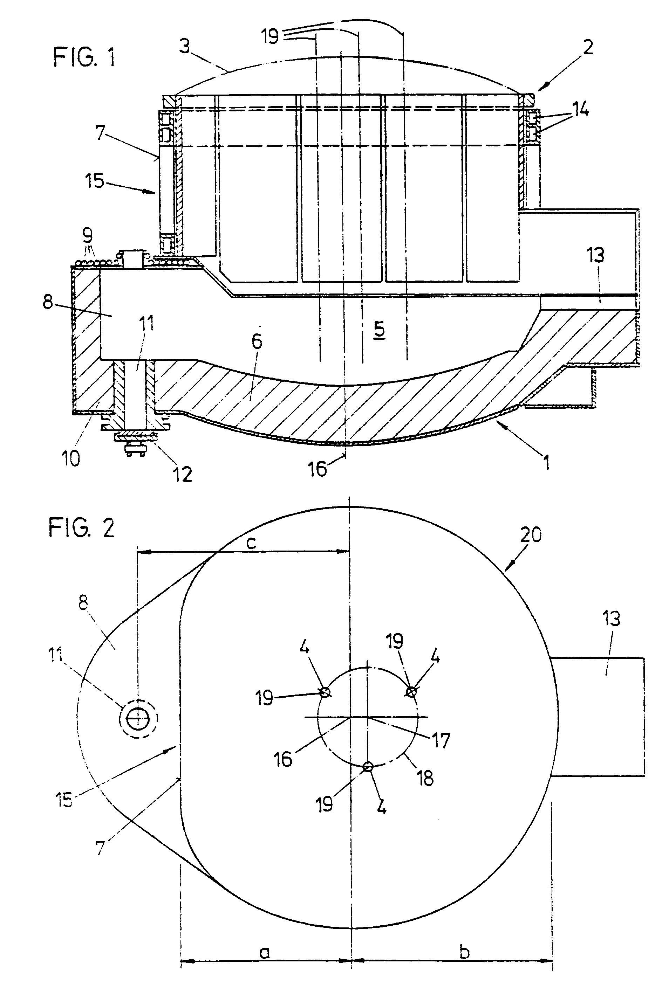

Wie aus Fig. 2 ersichtlich ist, ist der dem Abstichloch 11 zugewandte Wandteil 15 des Oberteils 2 radial zur Mittelachse 16 des Oberteils eingezogen ausgebildet und zwar abgeflacht, sodaß der Abstand a des eingezogenen Wandteiles 15 von der Mittelachse 16 geringer ist als der Abstand b des gegenüberliegenden Wandteiles von der Mittelachse 16. Durch diese Maßnahme ist es möglich, das Abstichloch 11 in geringerem Abstand c zur Mittelachse 16 des Oberteils anzuordnen als bei einem Oberteil 2 mit kreisförmigem Grundriß, ohne die Zugänglichkeit des Abstichloches 11 zur Lochpflege zu behindern. Die Gefahr- des Einfrierens von Schmelze im Bereich des Vorsprungs 8 wird dadurch herabgesetzt.

Wie aus Fig. 2 ersichtlich ist, sind die Elektroden 4 so angeordnet, daß der Mittelpunkt 17 des Kreisumfanges 18, an dem ihre Achsen 19 angeordnet sind, in Richtung zur Schlackenabflußrinne 13 zur Mittelachse 16 des Oberteils 2 versetzt liegt, sodaß der eingezogene Wandteil 15 des Ofenoberteils 2 keiner wesentlich größeren Wärmebelastung durch Strahlung ausgesetzt ist, als der kreiszylindrische Wandteil 20 des Oberteils 2.

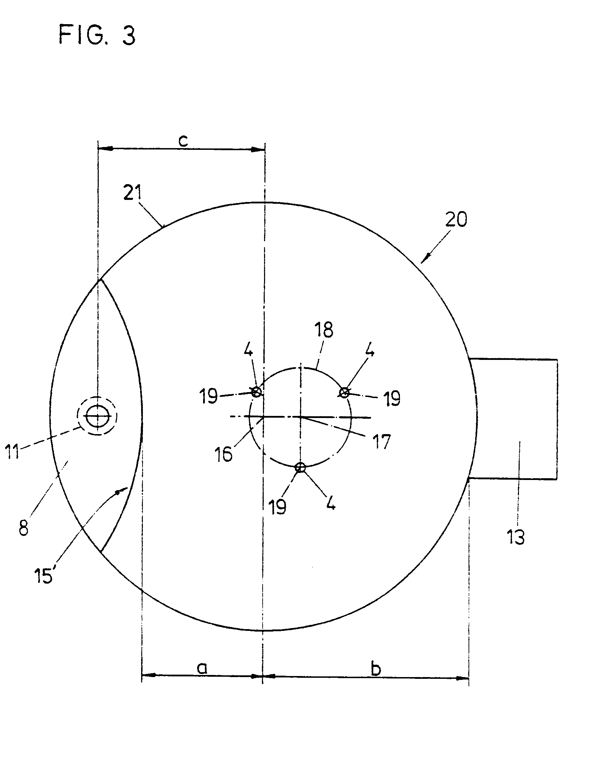

Eine besonders kompakte Bauart ist in Fig. 3 dargestellt. Der Ofenunterteil 1 weist einen kreisförmigen Umriß 21 auf. Der Ofenoberteil 2 ist zur Bildung des erkerartigen Vorsprungs 8 mit einem dem Abstichloch 11 zugewendeten konkav eingewölbten Wandteil 15′ ausgestaltet.

Der Ofeninnenraum 5 des erfindungsgemäßen Elektroofens ermöglich durch seine Verkleinerung infolge der Annäherung des Abstichloches 11 zur Mittelachse 16 Energieeinsparungen und eine Einsparung an feuerfester Auskleidung. Soll eine bestehende Anlage mit einem kreiszylindrischen Elektroofen zu einem Elektroofen mit einem erkerärtigen Vorsprung umgebaut werden, empfiehlt sich die in Fig. 3 dargestellte Ausführungsform in besonders hohem Maße, da der Unterteil 1 des Elektroofens und seine Unterkonstruktion im wesentlichen unverändert belassen werden kann.

## Patentansprüche

1. Elektroofen mit einem wannenförmigen Unterteil (1) und einem auf den Unterteil (1) aufgesetzten Oberteil (2), durch dessen Deckel (3) oder Seitenwände Elektroden (4) bzw. Plasmabrenner in den Ofeninnenraum (5) ragen, wobei der Unterteil (1) einen die Wand (15, 15′, 20) des Oberteiles (2) an mindestens einer Seite (7) nach außen erkerartig überragenden Vorsprung (8), in dessen Boden (10) das Abstichloch (11) angeordnet ist, aufweist, dadurch gekennzeichnet, daß nur der dem Abstichloch (11) zugewandte Wandteil (15) des Oberteiles (2) gegenüber der Mittellachse (16) des Oberteiles (2) eingezogen ist, und der radiale Abstand (a) des eingezogenen Wandteiles (15) von der Ofenmittelachse (16) geringer ist als der Abstand (b) des radial gegenüberliegenden Wandteiles (20).

2. Elektroofen nach Anspruch 1, dadurch gekennzeichnet, daß der Unterteil (1) einen im Grundriß kreisförmigen Umriß (21) mit integriertem Vorsprung (8) aufweist.

3. Elektroofen nach Anspruch 1, dadurch gekennzeichnet, daß die Elektroden (4) bzw. Plasma brenner zur Vergrößerung des Abstandes vom eingezogenen Wandteil (15) in Richtung zum gegenüberliegenden Wandteil (20) versetzt angeordnet sind.

4. Elektroofen nach den Ansprüchen 1 bis 3, dadurch gekennzeichnet, daß der dem Abstichloch (11) zugewandte Wandteil (15) des Oberteiles (2) abgeflacht oder konkav eingewölbt ist.

## Claims

1. Electric furnace including a tub-shaped lower part (1) and an upper part (2) placed on said lower part (1), through whose lid (3) or side walls electrodes (4) or plasma burners project into the furnace interior (5), the lower part (1) having a projection (8) reaching outwardly beyond the wall (15, 15′, 20) of the upper part (2) in a bay-like manner on at least one side (7), the bottom (10) of which projection accomodates the tap hole (11), characterised in that only the wall part (15) that faces the tap hole (11) of the upper part (2) is retracted with respect to the central axis (16) of the upper part (2) and the radial distance (a) of the retracted wall part (15) from the furnace central axis (16) is smaller than the distance (b) of the radially opposite wall part (20).

2. Electric furnace according to claim 1, characterised in that the lower part (1), in the ground section, has a circular contour (21) with integrated projection (8).

3. Electric furnace according to claim 1, characterised in that the electrodes (4) or plasma burners are arranged in offset manner, for increasing the distance from the retracted wall part (15), in direction towards the opposite wall part (20).

4. Electric furnace according to claims 1 to 3, characterised in that the wall part (15) of the upper part (2) facing the tap hole (11) is flattened or inwardly chased in concave manner.

## Revendications

1. Four électrique pourvu d'une partie inférieure (1) en forme de cuve et d'une partie supérieure (2) qui est posée sur la partie inférieure (1) et dont le couvercle (3) ou les parois latérales sont traversés par des électrodes (4) ou un brûleur à plasma qui pénètrent dans la cavité interne (5) du four, la partie inférieure (1) présentant une avancée (8) dépassant en forme de saillie vers l'extérieur de la paroi (15, 15', 20) de la partie supérieure (2) au moins sur un côté (7) de celle-ci, avancée (8) dans le fond (10) de laquelle est disposé le trou de coulée (11), caractérisé en ce que seule la partie de paroi (15) de la partie supérieure (2), partie de paroi (15) tournée vers le trou de coulée (11), est rapprochée de l'axe médian (16) de la partie supérieure (2), et en ce que l'écart radial (a) de la partie de paroi (15) rapprochée de l'axe médian (16) du four est plus faible que l'écart (b) de la partie de paroi (20) se trouvant radialement en vis-à-vis.

2. Four électrique selon la revendication 1, caractérisé en ce que la partie inférieure (1) présente en plan un contour circulaire (21) auquel s'intègre l'avancée (8).

3. Four électrique selon la revendication 1, caractérisé en ce que, en vue de l'accroissement de l'écart par rapport à la partie de paroi (15) rapprochée, les électrodes (4) ou le brûleur à plasma sont disposés décalés en direction de la partie de paroi (20) se trouvant en vis-à-vis.

4. Four électrique selon l'une des revendications 1 à 3, caractérisé en ce que la partie de paroi (15), tournée vers le trou de coulée (11), de la partie supérieure (2) est aplatie ou cintrée de façon concave.

FIG. 1

FIG. 2

FIG. 3